(19) **Europäisches Patentamt / European Patent Office / Office européen des brevets**

(11) **EP 4 506 901 A1**

(12) **EUROPEAN PATENT APPLICATION**
published in accordance with Art. 153(4) EPC

(43) Date of publication:
**12.02.2025   Bulletin 2025/07**

(21) Application number: **23784228.1**

(22) Date of filing: **31.03.2023**

(51) International Patent Classification (IPC):
***G06T 19/00*** (2011.01)

(86) International application number:
**PCT/CN2023/085565**

(87) International publication number:
**WO 2023/193664 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **08.04.2022   CN 202210369250**

(71) Applicant: **Beijing Zitiao Network Technology Co.,
Ltd.
Beijing 100190 (CN)**

(72) Inventor: **LI, Xiaofeng
Beijing 100028 (CN)**

(74) Representative: **Dentons UK and Middle East LLP
One Fleet Place
London EC4M 7WS (GB)**

(54) **IMAGE PROCESSING METHOD AND APPARATUS, AND ELECTRONIC DEVICE**

(57)      An image processing method, relating to the technical field of image processing. The method comprises: acquiring an original image (201); when it is determined that there is a foot feature area in the original image, determining a foot cover model according to the foot feature area of the original image, the foot cover model being used for marking an area to be optimized of the foot feature area (202); performing background completion on the area to be optimized of the original image to obtain a completed image (203); determining a shoe model according to the foot feature area in the completed image (204); and rendering the shoe model in the foot feature area in the completed image to obtain a target image (205). The problem of misalignment appearing when a shoe is put on a foot in a video is solved.

```
┌──────────────────────────────────────────────────────┐
│           an original image is obtained                │──── 201
└──────────────────────────────────────────────────────┘
                          │
                          ▼
┌──────────────────────────────────────────────────────┐
│ in response to determining that a foot feature area is │
│   in the original image, a foot overlay model is       │
│   determined according to the foot feature area in the │──── 202
│   original image, wherein the foot overlay model is    │
│   configured to mark an area to be optimized in the    │
│                 foot feature area                      │
└──────────────────────────────────────────────────────┘
                          │
                          ▼
┌──────────────────────────────────────────────────────┐
│ background completion is performed on the area to be   │
│   optimized in the original image to obtain a          │──── 203
│                 completed image                        │
└──────────────────────────────────────────────────────┘
                          │
                          ▼
┌──────────────────────────────────────────────────────┐
│ a shoe model is determined according to the foot       │
│   feature area of the completed image                  │──── 204
└──────────────────────────────────────────────────────┘
                          │
                          ▼
┌──────────────────────────────────────────────────────┐
│ the shoe model is rendered in the foot feature area in │
│   the completed image to obtain the target image       │──── 205
└──────────────────────────────────────────────────────┘
```

Fig. 2

EP 4 506 901 A1

**Description**

**CROSS-REFERENCE TO RELATED APPLICATIONS**

The present disclosure is based on and claims priority to CN Patent Application No. 202210369250.7 titled "IMAGE PROCESSING METHOD AND APPARATUS, AND ELECTRONIC DEVICE" and filed on April 8, 2022, the disclosure of which is incorporated by reference herein in its entirety.

**TECHNICAL FIELD**

The present disclosure relates to the field of image processing technology, in particular to an image processing method and apparatus and an electronic device.

**BACKGROUND**

In related Augmented Reality (AR) shoes try-on technology, shoes may be drawn onto the feet in a video through image processing.

**SUMMARY**

The embodiment of the present disclosure provides the following technical solution:

In a first aspect, an image processing method is provided. The method comprises: obtaining an original image; in response to determining that a foot feature area is in the original image, determining a foot overlay model according to the foot feature area in the original image, wherein the foot overlay model is configured to mark an area to be optimized in the foot feature area; performing background completion on the area to be optimized in the original image to obtain a completed image; determining a shoe model according to the foot feature area in the completed image; and rendering the shoe model in the foot feature area in the completed image to obtain a target image.

In a second aspect, an image processing apparatus is provided. The apparatus comprises: an obtaining module configured to obtain an original image; and a processing module configured to in response to determining that a foot feature area is in the original image, determine a foot overlay model according to the foot feature area in the original image, wherein the foot overlay model is configured to mark an area to be optimized in the foot feature area; perform background completion on the area to be optimized in the original image to obtain a completed image; determine a shoe model according to the foot feature area in the completed image; and render the shoe model in the foot feature area in the completed image to obtain a target image.

In a third aspect, an electronic device is provided. The electronic device comprises a processor, a memory and a computer program stored in the memory and executable on the processor, wherein the computer program, when executed by the processor, implements the image processing method according to the first aspect or its any alternative implementation.

In a fourth aspect, a computer-readable storage medium is provided. The storage medium comprises: a computer program stored on the computer-readable storage medium, wherein the computer program, when executed by a processor, implements the image processing method according to the first aspect or its any alternative implementation.

In a fifth aspect, a computer program is provided. The computer program comprises instructions that, when executed by a processor, cause the processor to perform the image processing method according to the first aspect or its any alternative implementation.

**BRIEF DESCRIPTION OF THE ACCOMPANYING DRAWINGS**

The accompanying drawings here, which are incorporated into the specification and constitute part of this specification, show the embodiments conforming to the present disclosure and serve to explain the principles of the present disclosure together with the specification.

In order to explain the technical solution in the embodiments of the present disclosure or in the related art more explicitly, the accompanying drawings required to be used in the description of the embodiments or the related art will be briefly introduced below. Obviously, for those of ordinary skill in the art, other accompanying drawings may also be obtained according to these accompanying drawings on the premise that no inventive effort is involved.

Fig. 1 is a schematic view of a goof case in response to shoes being drawn onto the feet in a video provided by an embodiment of the present disclosure;

Fig. 2 is a flowchart of an image processing method provided by an embodiment of the present disclosure;

Fig. 3 is a schematic view of a foot overlay model provided by an embodiment of the present disclosure;

Fig. 4 is a schematic view of a completed image provided by an embodiment of the present disclosure;

Fig. 5A is a schematic view of a background completion method provided by an embodiment of the present disclosure;

Fig. 5B is a schematic view of another background completion method provided by an embodiment of the present disclosure;

Fig. 6 is a schematic view of obtaining a target image provided by an embodiment of the present disclosure;

Fig. 7 is a structural block view of an image processing apparatus provided by an embodiment of the present disclosure;

Fig. 8 is a schematic structural view of an electronic device provided by an embodiment of the present disclosure.

**DETAILED DESCRIPTION**

In order to understand the above-described objects, features and advantages of the present disclosure more explicitly, the solution of the present disclosure will be further described below. It is to be noted that, the embodiments of the present disclosure and the features in the embodiments may be combined with each other in the case where contradiction is absent.

In the following description, many specific details will be elaborated in order to adequately understand the present disclosure. However, the present disclosure may also be implemented in other methods than that described here. Apparently, the embodiments in the specification are only some of the embodiments of the present disclosure, rather than all of the embodiments.

In the embodiment of the present disclosure, the words "exemplary" or "for example" are used to express as examples, illustrations or explanations. Any embodiment or design solution described as "exemplary" or "for example" in the embodiment of the present disclosure should not be construed as being more preferred or advantageous than other embodiments or design solutions. Specifically, the use of words such as "exemplary" or "for example" is intended to present related concepts in a concrete way. In addition, in the description of the embodiment of the present disclosure, unless otherwise stated, the meaning of "a plurality of" refers to two or more.

In the related art, in order to achieve the effect of trying on shoes, the shoes may be drawn onto the feet in a video through image processing. However, for some shoes with a special structure, in response to the shoes being drawn onto the feet in the video, some features of the feet might goof in response to being exposed in positions not covered by the shoes, that is, for some shoes with a special structure, in response to the shoes being drawn onto the feet in the video, there is a glitch in the foot feature rendering, causing some parts of the feet to be exposed and resulting in an inconsistency with the shoe fitting. On such basis, there is an urgent need for an image processing method where no goof occurs, so that no goof occurs in response to the shoes being drawn onto the feet in the video.

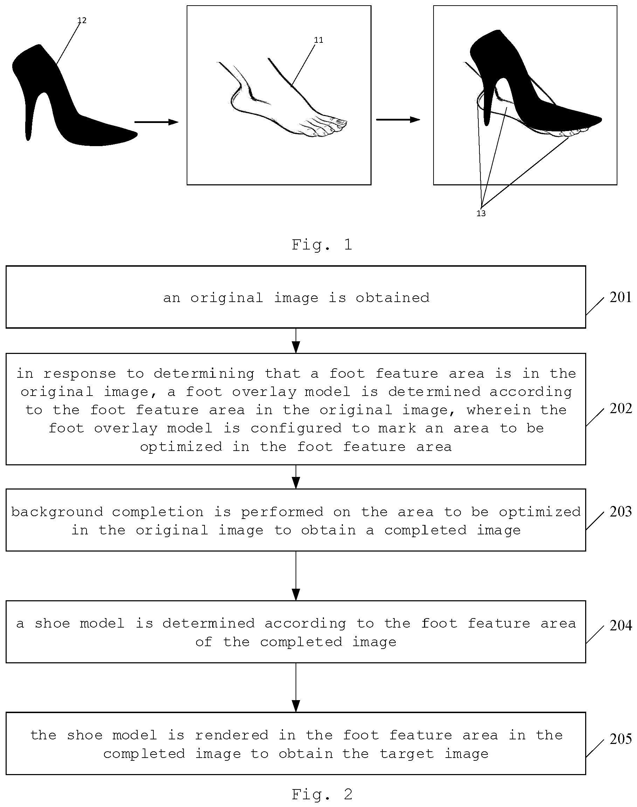

For example, suppose that for shoes with a special structure, such as high heels, in response to the shoes being drawn onto the feet in the video, some features of the toe or heel part might goof in response to being exposed in positions not covered by the shoes. Fig. 1 is a schematic view of a goof case in response to shoes being drawn onto the feet in a video provided by an embodiment of the present disclosure. As shown in Fig. 1, after a shoe model 12 is drawn to a foot feature area 11 in the video, there will be a goof area 13 as shown in Fig. 1 in the obtained image.

In order to solve the above-described technical problem or at least partially solve the above-described technical problem, the present disclosure provides an image processing method and apparatus and an electronic device, and for some shoes with a special structure, it is possible to avoid the problem of goof occurring in response to the shoes being drawn onto the feet in a video through image processing.

In some embodiments, the embodiment of the present disclosure provides an image processing method, in which it is possible to first determine an area to be optimized in a foot feature area in an original image through a foot overlay model and perform background completion before wearing the shoes on the feet in an image through image processing. In this way, after the shoe model is subsequently rendered to the original image, even if the shoes are shoes with a special structure, since background completion is performed on the foot feature in advance, the foot feature will not be exposed outside the rendered shoe model after the shoe model is rendered, and the obtained target image conforms more to a screen of putting shoes onto the feet in an actual scene, thereby avoiding a goof case.

The image processing method provided in an embodiment of the present disclosure may be implemented by an image processing apparatus or an electronic device, and the image processing apparatus may be a functional module or a functional entity in the electronic device. The above-described electronic device may comprise: a cell phone, a tablet computer, a notebook computer, a palmtop computer, an in-vehicle terminal, a wearable device, an ultra-mobile personal computer (UMPC), a netbook, a personal digital assistant (PDA), a personal computer (PC) and the like, and the embodiment of the present disclosure is not specifically limited thereto.

As shown in Fig. 2, it is a flowchart of an image processing method provided by an embodiment of the present disclosure, which comprises the following Steps 201 to 205.

In Step 201, an original image is obtained.

The above-described original image may be a frame of images in a video image obtained in real time.

In Step 202, in response to determining that a foot feature area is in the original image, a foot overlay model is determined according to the foot feature area in the original image, wherein the foot overlay model is configured to mark an area to be optimized in the foot feature area.

The foot overlay model may be a model that can cover the heel and the forefoot, and the area covered by the foot overlay model is the area that might cause goof in response to the shoes being drawn to the foot feature area. The foot overlay model may be a preset model.

In some embodiments, for some shoe models with a very special structure, it might be necessary to provide foot overlay models corresponding to these shoe models. In other words, the foot overlay models corresponding to different shoe models might be different. For example, the shoes with a triangular contour correspond to one foot overlay model, and the shoes with a diamond contour correspond to another foot overlay model.

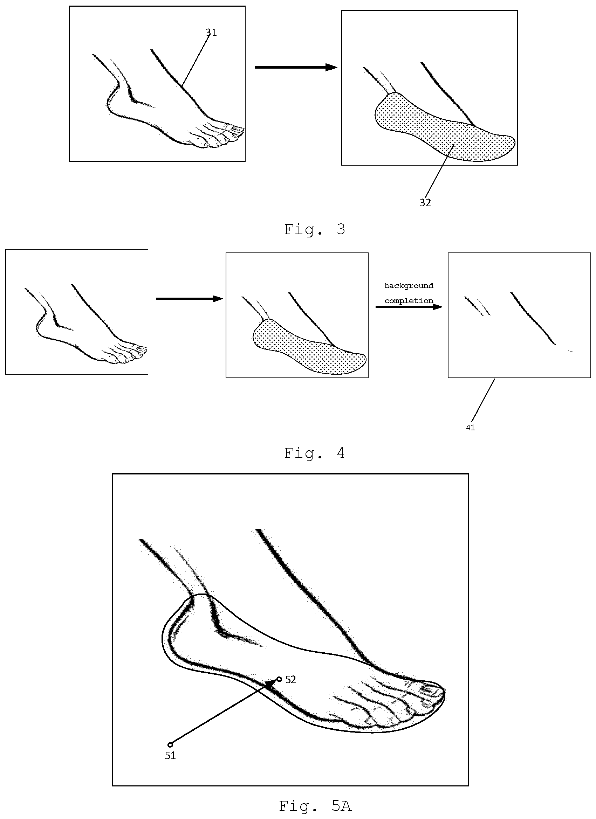

In some embodiments, as shown in Fig. 3, it is a schematic view of a foot overlay model provided by an embodiment of the present disclosure. The foot overlay model 32 is determined based on the foot feature area 31 present in the image in Fig. 3, wherein the area indicated by the foot overlay model 32 is the area to be optimized.

Returning to Fig. 2, in Step 203, background completion (background inpainting) is performed on the area to be optimized in the original image to obtain a completed image.

As shown in Fig. 4, it is a schematic view of a completed image provided by an embodiment of the present disclosure. In some embodiments, the area to be optimized in the foot feature area may be determined according to the foot overlay model, and then background completion may be performed on this area, so that a completed image 41 may be obtained.

In the embodiment of the present disclosure, there may be a plurality of specific background completion methods, and several possible implementations will be illustrated below.

In some embodiments, the method of performing background completion on the area to be optimized in the original image comprises: according to an initial screen coordinates of a target pixel point in the area to be optimized in the original image, a width of the foot feature area on the screen and a length of the foot feature area on the screen, calculating the offset screen coordinates corresponding to the target pixel point; and replacing a color value of the target pixel point with a color value of a pixel point corresponding to the offset screen coordinates to perform background completion on the area to be optimized. The target pixel point is any of at least some pixels in the area to be optimized, and the at least some pixels in the area to be optimized comprise all pixels in the area to be optimized or some pixels in the area to be optimized.

In the embodiment of the present disclosure, the color values involved refer to the values of three channels: R (red), G (green) and B (blue).

In the above-described embodiments, by using texture mapping, the color values of the pixel points in the non-foot feature area are sampled by using the initial screen coordinates of the target pixel point in the area to be optimized in the original image, the width of the foot feature area on the screen and the length of the foot feature area on the screen, and the color values of the pixel points in the area to be optimized are replaced with the color values of the pixel points in the non-foot feature area. In this method, the pixel points of the non-foot feature area are determined as a background, and the color value of the area to be optimized is replaced with the color value of the non-foot area to perform background completion on the area to be optimized.

In some embodiments, the color values of the pixel points in the area to be optimized may be replaced with the color values of the pixel points at a distance from the foot feature area within a preset range. In this method, the pixel points at a distance from the foot feature area within a preset range are determined as background, so as to perform background completion on the area to be optimized.

For example, the following formula (1) may be used to calculate the color value of the pixel points in the area to be optimized after background completion:

$$\text{Color} = \text{texture2D}(\text{u\_inputTex}, \text{g\_vary\_sp\_uv} - \text{u\_widthVector} + \text{u\_heightVector}) \tag{1}$$

In the formula (1), "Color" represents the color value of a pixel point in the area to be optimized after background completion, "texture2D" represents 2D texture mapping, "u_inputTex" is the input texture of a corresponding image of the video, also that is, the initial color value of the pixel, "g_vary_sp_uv" is the screen coordinates of the currently rendered pixel point, that is, the screen coordinates corresponding to the pixel point, and "u_widthVector" is the length of the foot feature area on the screen.

As shown in Fig. 5A, it is a schematic view of a background completion method provided by an embodiment of the present disclosure. For example, the offset screen coordinates corresponding to the pixel point 52 may be calculated based on the initial screen coordinates of the pixel point 52 in the area to be optimized, the width of the foot feature area on the screen and the length of the foot feature area on the screen, and the pixel point 51 corresponding to the offset screen coordinates may be determined according to the offset screen coordinates, and the color value of the pixel point 52 may be replaced with the color value of the pixel point 51. For each pixel point in the area to be optimized indicated by the foot overlay model in Fig. 5A, the color value may be replaced in the above-described method to perform background completion on the pixel point in the area to be optimized.

In some embodiments, the method of performing background completion on the area to be optimized in the original image comprises: according to an obtained initial color value of a target pixel point in the area to be optimized in the original image and the initial color value of an adjacent pixel point of the target pixel point, determining the final color value corresponding to the target pixel point; replacing the initial color value of the target pixel point with the final color value corresponding to the target pixel point to perform background completion on the area to be optimized. The target pixel point is any pixel in at least some pixels in the area to be optimized. The at least some pixels in the area to be optimized comprise all pixels in the area to be optimized or some pixels in the area to be optimized.

In some embodiments, the final color value corresponding to the target pixel point may be a result of weighted summation of the initial color value of the target pixel point in the area to be optimized and the initial color value of an adjacent pixel point thereof. In this way, the final color value of the area closer to the background in the area to be optimized will be closer to the real background, so that the area to be optimized may be integrated with the background, and the boundary between the area to be optimized and the background may be blurred, which may also implement performing background completion on the area to be optimized.

In some embodiments, the weight value of the current pixel point (the target pixel point) to be optimized in the area to be optimized may be set to be larger, and the weight value of an adjacent pixel point of the current pixel point may be set to be smaller, which may achieve a better display effect.

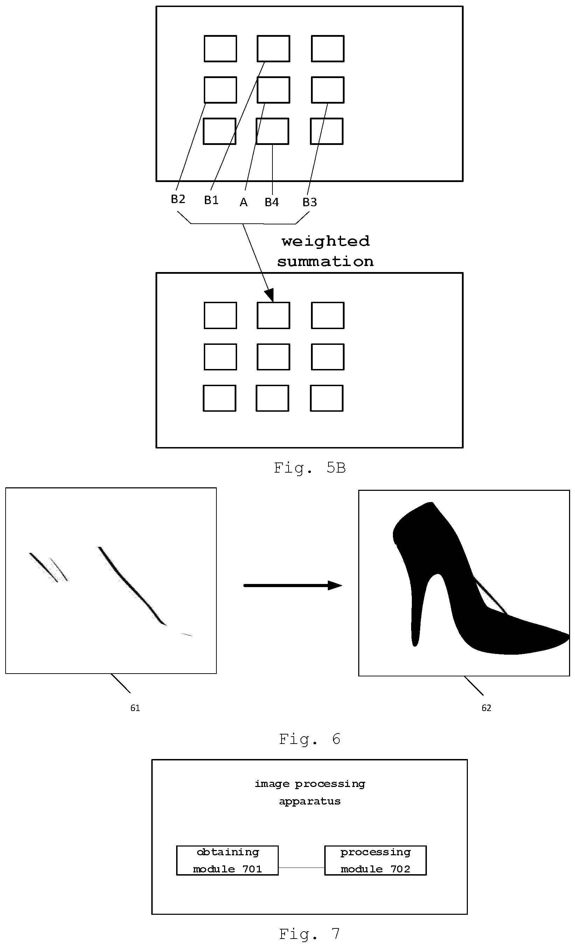

As shown in Fig. 5B, for the pixel point A in the original image, suppose that the initial color value of the pixel point A in the original image is obtained, and the initial color value of four pixel points comprising the pixel point B1, the pixel point B2, the pixel point B3 and the pixel point B4 adjacent to the pixel point A are obtained. Afterwards, after weighted summation of the initial color value of five pixels comprising the pixel point A, the pixel point B1, the pixel point B2, the pixel point B3 and the pixel point B4, the final color value is calculated, and then the color value of the pixel point A is replaced with the final color value.

Returning to Fig. 2, in Step 204, a shoe model is determined according to the foot feature area of the completed image.

In Step 205, the shoe model is rendered in the foot feature area in the completed image to obtain the target image.

In some embodiments, as shown in Fig. 6, it is a schematic view of obtaining a target image provided by an embodiment of the present disclosure. After the completed image 61 is obtained, the shoe model may also be further determined, and based on the completed image 61, the shoe model is rendered in the foot feature area of the completed image, and then the target image 62 as shown in Fig. 6, that is, the image of the effect of trying on high heels, may be obtained.

In the image processing method provided by the embodiment of the present disclosure, it is possible to obtain the original image; determine a foot overlay model according to a foot feature area of the original image in response to determining that a foot feature area is in the original image, wherein the foot overlay model is configured to mark an area to be optimized in the foot feature area; perform background completion on the area to be optimized in the original image to obtain a completed image; determine the shoe model according to the foot feature area of the completed image; render the shoe model in the foot feature area in the completed image so as to obtain the target image. By way of this solution, before putting shoes on the feet in the image, the area to be optimized in the foot feature area in the original image may be first determined by the foot overlay model, and background completion may be performed. In this way, after the shoe model is subsequently rendered in the original image, even if the shoes are shoes with a special structure, background completion may be performed on the foot feature in advance. Therefore, after the shoe model is rendered, the foot feature will not be exposed outside the rendered shoe model, and in addition, the obtained target image conforms more to an actual screen of putting shoes on the feet, so as to avoid a goof case.

In the image processing method provided by the embodiment of the present disclosure, after it is implemented that the shoe model is drawn in the foot feature area of the image according to the above-described steps 201 to 205, some special display effects may also be superimposed on the shoe model, effects may be superimposed based on some effect view sampling, and a fade-in effect may also be realized when the shoe model is drawn. In some embodiments, the starfield effect may be superimposed on the basis of the shoe model, and the fade-in effect from heel to toe may be realized in response to the shoe model being drawn, or the fade-in effect from toe to heel may be realized in response to the shoe model being drawn.

In some embodiments, after rendering the shoe model to obtain the target image in the foot feature area of the completed image in the above-described step 205, there may further comprise the following steps: obtaining the initial color value of the first pixel point, wherein the first pixel point is any pixel point corresponding to the shoe model in the completed image; sampling from the target effect image to obtain a first color value according to the first coordinates corresponding to the first pixel point; calculating the final color value of the first pixel point according to the initial color value of the first pixel point and the first color value; and replacing the initial color value of the first pixel point with the final color value.

For example, the first coordinates comprise any of the following: two-dimensional space coordinates, world space coordinates, and screen control coordinates.

In some embodiments, the final color value of the first pixel point may be calculated according to the following formula (2), that is, according to the initial color value of the first pixel point and the first color value.

$$finalRGB.xyz = refractionRGB.xyz * galaxyColor * 2.0 * (1.0 - cfg) + (1.0 - (1.0 - galaxyColor) * (1.0 - refractionRGB.xyz) * 2.0) \tag{2}$$

In the formula (2), "finalRGB.xyz" represents the final color value of the first pixel point, "refractionRGB.xyz" represents the initial color value of the first pixel point, and "galaxyColor" represents the first color value obtained by sampling from the target effect image according to the first coordinates corresponding to the first pixel point, wherein the target effect image may be a starfield effect image, and "cfg" is the superposition parameter of the initial color value of the first pixel point and the first color value, wherein the first pixel point is used to indicate the ratio when the initial color value of the first pixel point and the first color value are superimposed. The superposition parameter may be set according to actual requirements, and the embodiment of the present disclosure is not limited thereto.

In some embodiments, suppose that the above-described target effect image is a starfield effect image, the starfield effect will be fixed on the shoe model in response to "galaxyColor" is a color value obtained by sampling based on the two-dimensional space coordinates (UV coordinates); the starfield effect will realize a flow effect when the model moves in response to "galaxyColor" being a color value obtained by sampling based on the world space coordinates; and the starfield effect is displayed in a fixed position on the screen in response to "galaxyColor" being a color value obtained by sampling based on the screen control coordinates.

In the above-described embodiments, the target effect may be superimposed on the shoe model by sampling the target effect image, so that the rendered shoes have a better display effect.

In some embodiments, the method of rendering the shoe model in the foot feature area in the image to obtain the target image comprise: establishing a shoe model space based on the shoe model; determining a target noise value according to the second coordinates in the shoe model space, wherein the second coordinates are any model space coordinates in the shoe model space; in response to the target noise value being greater than the preset value, rendering the second pixel point corresponding to the second coordinates in the foot feature area.

In some embodiments, the preset value decreases within a first duration. The first duration is the total duration of drawing a complete shoe model.

In some embodiments, the above-described embodiments may implement dissolution and fade-in based on the axial direction of the shoe model space, and add noise to increase the randomness of the edge, so as to realize the fade-in effect of the shoes from toe to heel.

First of all, a shoe model space is established based on the shoe model, wherein the direction from heel to toe may be taken as an axial direction of the shoe model space (for example, it may be the Y axis of the shoe model space). Then, for any model space coordinates in the shoe model space, a value corresponding to the model space coordinates on the Y axis is determined, and this value is taken as a corresponding target noise value. For example, suppose that the value corresponding to the toe is 1 and the value corresponding to the heel is 0 on the Y axis, then the target noise value is a value between 0 and 1, which is determined as the target noise value.

Then, the preset value is set to be a value that gradually changes from 1 to 0 over time in the first duration. In response to the target noise value being greater than the preset value, the second pixel point corresponding to the second coordinates is rendered in the foot feature area, and correspondingly, in response to the target noise value being less than or equal to the preset value, the second pixel point corresponding to the second coordinates is not rendered in the foot feature area. In this way, the fade-in display effect from toe to heel may be presented.

In some embodiments, the above-described method of determining the target noise value according to the second coordinates in the shoe model space comprises: determining the first noise value according to the position of the second coordinates along a target axial direction in the shoe model space; generating a random number according to the second coordinates; and calculating the target noise value according to the first noise value and the random number.

First of all, a shoe model space is established based on the shoe model, wherein the direction from heel to toe may be taken as an axial direction of the shoe model space (for example, it may be the Y axis of the shoe model space). Then, for the second coordinates in the shoe model space, the value corresponding to the model space coordinates on the Y axis is determined, and this value is taken as the corresponding first noise value. For example, suppose that the value corresponding to the toe is 1 and the value corresponding to the heel is 0 on the Y axis, then the target noise value is a value between 0 and 1, which is determined as the first noise value.

Then, according to the above-described second coordinates, a random number between -0.05 and 0.05 is generated, and the result obtained by superimposing the random number on the basis of the first noise value is taken as the target noise value.

In some embodiments, the above-described target noise value may be calculated according to the following formula (3):

$$noise3 = noise1 + noise2 \tag{3}$$

In the formula (3), "noise3" represents the target noise value, "noise1" represents the first noise value, and "noise2" represents the above-described random number.

In some embodiments, the preset value is set to be a value that gradually changes from 1 to 0 over time in the first duration. After determining the target noise value, in response to the target noise value being greater than the preset value, the second pixel point corresponding to the second coordinates is rendered in the foot feature area, and correspondingly, in response to the target noise value being less than or equal to the preset value, the second pixel point corresponding to the second coordinates is not rendered in the foot feature area. In this way, the fade-in display effect from toe to heel may be presented.

In the above-described embodiments, since the target noise value is a random number added on the basis of the first noise value, in response to the shoe model being drawn, not only the fade-in display effect from toe to heel may be presented, but also in response to the pixel points with consistent axial coordinates corresponding to the direction from heel to toe being processed, these pixel points will not be drawn at the same time, so that during the process of presenting the fade-in from toe to heel, it is possible to avoid that the display effect is not natural or smooth due to a flush fade-in effect.

As shown in Fig. 7, the embodiment of the present disclosure provides a structural block view of an image processing apparatus, comprising: an obtaining module 701 configured to obtain an original image; a processing module 702 configured to determine a foot overlay model according to a foot feature area of the original image in response to determining that a foot feature area is in the original image, wherein the foot overlay model is configured to mark an area to be optimized in the foot feature area; perform background completion on the area to be optimized in the original image to obtain a completed image; determine a shoe model according to the foot feature area in the completed image; and render the shoe model in the foot feature area in the completed image to obtain a target image.

As one alternative implementation of the embodiment of the present disclosure, the processing module 702 may be, for example, configured to: according to an initial screen coordinates of a target pixel point in the area to be optimized in the original image, a width of the foot feature area on the screen and a length of the foot feature area on the screen, calculate the offset screen coordinates corresponding to the target pixel point, wherein the target pixel point is any pixel point in at least some pixel points in the area to be optimized; and replace the color value of the target pixel point with the color value of the pixel point corresponding to the offset screen coordinates to perform background completion on the area to be optimized.

As one alternative implementation of the embodiment of the present disclosure, the processing module 702 may be, for example, configured to: determine a final color value corresponding to a target pixel point according to the obtained initial color value of the target pixel point in the area to be optimized in the original image and the initial color value of an adjacent pixel point of the target pixel point, wherein the target pixel point is any pixel point in at least some pixel points in the area to be optimized; and replace the initial color value of the target pixel point with the final color value corresponding to the target pixel point to perform background completion on the area to be optimized.

As one alternative implementation of the embodiment of the present disclosure, the processing module 702 is further configured to: obtain an initial color value of a first pixel point, wherein the first pixel point is any pixel point corresponding to the shoe model in the completed image; sample from a target effect image according to the first coordinates corresponding to the first pixel point to obtain a first color value; calculate a final color value of the first pixel point according to the initial color value of the first pixel point and the first color value; and replace the initial color value of the first pixel point with the final color value.

As one alternative implementation of the embodiment of the present disclosure, the first coordinates comprise any of the following: two-dimensional space coordinates, world space coordinates and screen control coordinates.

As one alternative implementation of the embodiment of the present disclosure, the processing module 702 is specifically configured to: establish a shoe model space based on the shoe model; determine a target noise value according to the second coordinates in the shoe model space, wherein the second coordinates are any model space coordinates in the shoe model space; and render the second pixel point corresponding to the second coordinates in the foot feature area in response to the target noise value being greater than a preset value.

As one alternative implementation of the embodiment of the present disclosure, the processing module 702 may be, for example, configured to: determine a first noise value according to the position of the second coordinates along a target axial direction in the shoe model space; generate a random number according to the second coordinates; and calculate the target noise value according to the first noise value and the random number.

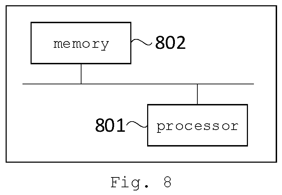

As shown in Fig. 8, the embodiment of the present disclosure provides an electronic device, comprising: a processor 801, a memory 802, and a computer program stored on the memory 802 and running on the processor 801. When the computer program is executed by the processor 801, each process of the image processing method in the above-described method embodiments is realized, and the same technical effect may be achieved, which will not be described in detail here in order to avoid repetition.

The embodiment of the present invention provides a computer-readable storage medium having a computer program stored thereon that, when executed by a processor 801, implement each process of the image processing method in the above-described method embodiments, and the same technical effect may be achieved, which will not be described in detail here in order to avoid repetition.

In some embodiments, the computer-readable storage medium may be a Read-Only Memory (ROM), a Random Access Memory (RAM), a magnetic disk or an optical disk.

The embodiment of the present invention provides a computer program product having a computer program stored thereon that, when executed by a processor, implement each process of the image processing method in the above-described method embodiments, and the same technical effect may be achieved, which will not be described in detail here in order to avoid repetition.

The embodiment of the present disclosure provides a computer program comprising instructions that, when executed by a processor, cause the processor to perform the image processing method according to any of the embodiments in the present disclosure.

Those skilled in the art will appreciate that the embodiments of the present disclosure may be provided as a method, system, or computer program product. Accordingly, the present disclosure may take the form of an entirely hardware embodiment, an entirely software embodiment, or a combination of software and hardware aspects. Moreover, the present disclosure may take the form of a computer program product embodied in one or more computer-usable storage media containing computer usable program codes therein.

In the present disclosure, the processor may be a Central Processing Unit (CPU), and may also be other general purpose processors, a Digital Signal Processor (DSP), an Application Specific Integrated Circuit (ASIC), a Field-Programmable Gate Array (FPGA) or other programmable logic devices, a discrete gate or transistor logic device, and a discrete hardware component. The general purpose processor may be a microprocessor or the processor may also be any conventional processor or the like.

In the present disclosure, the memory might be in the form of a non-permanent memory, a random access memory (RAM) and/or a nonvolatile memory in a computer-readable medium, for example, a Read-only Memory (ROM) or a flash (flash R_AM) . The memory is an example of a computer-readable medium.

In the present disclosure, the computer-readable medium comprises a permanent, non-permanent, removable and non-removable storage medium. The storage medium may implement information storage by any method or technology, and information may be computer-readable instructions, data structures, modules of programs or other data. Examples of storage media for computers comprise, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, Compact Disc Read-Only Memory (CD-ROM), digital versatile disc (DVD) or other optical storage, magnetic cassette type magnetic tape, magnetic disk storage or other magnetic storage devices, or any other non-transmission medium, which may be used to store information accessible by a computing device. According to the delimitation herein, the computer-readable medium does not comprise temporary computer-readable media (transitory media), such as modulated data signals and carrier waves.

It is to be noted that, the relational terms such as "first" and "second" herein are only used to distinguish one entity or operation from another entity or operation, but do not necessarily require or imply any such actual relationship or sequence present between these entities or operations. Moreover, the terms "comprising", "including" or any other variation thereof are intended to cover non-exclusive inclusions, so that a process, method, article or device comprising a series of elements comprises not only those elements, but also other elements not explicitly listed or elements inherent to such process, method, article or device. In the case where there are no more restrictions, an element defined by the phrase "comprising one..." does not exclude an additional identical element also present in the process, method, article or device comprising the element.

The above only pertains to a detailed description of the present disclosure, so that those skilled in the art may understand or realize the present disclosure. Multiple modifications to these embodiments will be obvious for those skilled in the art, and the general principles defined herein may be realized in other embodiments without departing from the spirit or scope of this disclosure. Therefore, the present disclosure will not be limited to these embodiments herein, but intended to conform to the broadest scope consistent with the principles and novel features disclosed herein.

**Claims**

1. An image processing method, comprising:

   obtaining an original image;
   in response to determining that a foot feature area is in the original image, determining a foot overlay model according to the foot feature area in the original image, wherein the foot overlay model is configured to mark an area to be optimized in the foot feature area;
   performing background completion on the area to be optimized in the original image to obtain a completed image;
   determining a shoe model according to the foot feature area in the completed image; and
   rendering the shoe model in the foot feature area in the completed image to obtain a target image.

2. The image processing method according to claim 1, wherein the performing background completion on the area to be optimized in the original image comprises:

   according to an initial screen coordinates of a target pixel point in the area to be optimized in the original image, a width of the foot feature area on the screen and a length of the foot feature area on the screen, calculating the offset screen coordinates corresponding to the target pixel point, wherein the target pixel point is any pixel point in at least some pixel points in the area to be optimized; and
   replacing the color value of the target pixel point with the color value of a pixel point corresponding to the offset screen coordinates to perform background completion on the area to be optimized.

3. The image processing method according to claim 1, wherein the performing background completion on the area to be optimized in the original image comprises:

   according to an obtained initial color value of a target pixel point in the area to be optimized in the original image and the initial color value of an adjacent pixel point of the target pixel point, determining the final color value corresponding to the target pixel point, wherein the target pixel point is any pixel point in at least some pixel points in the area to be optimized; and
   replacing the initial color value of the target pixel point with the final color value corresponding to the target pixel point to perform background completion on the area to be optimized.

4. The image processing method according to claim 3, wherein the determining the final color value corresponding to the target pixel point comprises:

   performing weighted summation of the initial color value of the target pixel point in the area to be optimized and the initial color value of an adjacent pixel point of the target pixel point; and
   determining the final color value corresponding to the target pixel point according to a result after the weighted summation.

5. The image processing method according to claim 4, wherein the weight value corresponding to the target pixel point in the area to be optimized is greater than the weight value corresponding to the adjacent pixel point of the target pixel point.

6. The image processing method according to any of claims 1 to 5, further comprising:

   after rendering the shoe model in the foot feature area in the completed image to obtain a target image, obtaining an initial color value of a first pixel point, wherein the first pixel point is any pixel point corresponding to the shoe model in the completed image;
   sampling from a target effect image according to the first coordinates corresponding to the first pixel point to obtain a first color value;
   calculating a final color value of the first pixel point according to the initial color value of the first pixel point and the first color value; and
   replacing the initial color value of the first pixel point with the final color value.

7. The image processing method according to claim 6, wherein the calculating a final color value of the first pixel point according to the initial color value of the first pixel point and the first color value comprises:
   superposing the initial color value of the first pixel point and the first color value according to a superposition parameter to obtain the final color of the first pixel point, wherein the superposition parameter is used to indicate the ratio when the initial color value of the first pixel point and the first color value are superimposed.

8. The image processing method according to any of claims 6 to 7, wherein the first coordinates comprise any of two-dimensional space coordinates, world space coordinates and screen control coordinates.

9. The image processing method according to any of claims 1 to 8, wherein the rendering the shoe model in the foot feature area in the completed image to obtain a target image comprises:

   establishing a shoe model space based on the shoe model;
   determining a target noise value according to the second coordinates in the shoe model space, wherein the second coordinates are any model space coordinates in the shoe model space; and
   rendering the second pixel point corresponding to the second coordinates in the foot feature area in response to the target noise value being greater than a preset value, wherein the preset value decreases within a first duration.

10. The image processing method according to claim 9, wherein the determining a target noise value according to the second coordinates in the shoe model space comprises:

    determining a first noise value according to the position of the second coordinates along a target axial direction in the shoe model space;
    generating a random number according to the second coordinates; and
    calculating the target noise value according to the first noise value and the random number.

11. An image processing apparatus comprising:

    an obtaining module configured to obtain an original image; and
    a processing module configured to
    in response to determining that a foot feature area is in the original image, determine a foot overlay model according to the foot feature area in the original image, wherein the foot overlay model is configured to mark an area to be optimized in the foot feature area;
    perform background completion on the area to be optimized in the original image to obtain a completed image;
    determine a shoe model according to the foot feature area in the completed image; and
    render the shoe model in the foot feature area in the completed image to obtain a target image.

12. The image processing apparatus according to claim 11, wherein the processing module is configured to:

    according to an initial screen coordinates of a target pixel point in the area to be optimized in the original image, a width of the foot feature area on the screen and a length of the foot feature area on the screen, calculate the offset screen coordinates corresponding to the target pixel point, wherein the target pixel point is any pixel point in at least some pixel points in the area to be optimized; and
    replace the color value of the target pixel point with the color value of a pixel point corresponding to the offset screen coordinates to perform background completion on the area to be optimized.

13. The image processing apparatus according to claim 11, wherein the processing module is configured to:

    according to an obtained initial color value of a target pixel point in the area to be optimized in the original image and the initial color value of an adjacent pixel point of the target pixel point, determine the final color value corresponding to the target pixel point, wherein the target pixel point is any pixel point in at least some pixel points in the area to be optimized; and
    replace the initial color value of the target pixel point with the final color value corresponding to the target pixel point to perform background completion on the area to be optimized.

14. The image processing apparatus according to any of claims 11 to 13, wherein the processing module is further configured to:

    obtain an initial color value of a first pixel point, wherein the first pixel point is any pixel point corresponding to the shoe model in the completed image;
    sample from a target effect image according to the first coordinates corresponding to the first pixel point to obtain a first color value;

calculate a final color value of the first pixel point according to the initial color value of the first pixel point and the first color value; and

replace the initial color value of the first pixel point with the final color value.

15. The image processing apparatus according to claim 14, wherein the first coordinates comprise any of the following: two-dimensional space coordinates, world space coordinates and screen control coordinates.

16. The image processing apparatus according to any of claims 11 to 15, wherein the processing module is configured to:

establish a shoe model space based on the shoe model;

determine a target noise value according to the second coordinates in the shoe model space, wherein the second coordinates are any model space coordinates in the shoe model space; and

render a second pixel point corresponding to the second coordinates in the foot feature area in response to the target noise value being greater than a preset value, wherein the preset value decreases within a first duration.

17. The image processing apparatus according to claim 16, wherein the processing module is configured to:

determine a first noise value according to the position of the second coordinates along a target axial direction in the shoe model space;

generate a random number according to the second coordinates; and

calculate the target noise value according to the first noise value and the random number.

18. An electronic device, comprising a processor, a memory and a computer program stored in the memory and executable on the processor, wherein the computer program, when executed by the processor, implements the image processing method according to any of claims 1 to 10.

19. A computer-readable storage medium, comprising: a computer program stored on the computer-readable storage medium, wherein the computer program, when executed by a processor, implements the image processing method according to any of claims 1 to 10.

20. A computer program, comprising instructions that, when executed by a processor, cause the processor to perform the image processing method according to any of claims 1 to 10.

Fig. 1

| | |
|---|---|
| an original image is obtained | 201 |

| | |
|---|---|
| in response to determining that a foot feature area is in the original image, a foot overlay model is determined according to the foot feature area in the original image, wherein the foot overlay model is configured to mark an area to be optimized in the foot feature area | 202 |

| | |
|---|---|
| background completion is performed on the area to be optimized in the original image to obtain a completed image | 203 |

| | |
|---|---|
| a shoe model is determined according to the foot feature area of the completed image | 204 |

| | |
|---|---|
| the shoe model is rendered in the foot feature area in the completed image to obtain the target image | 205 |

Fig. 2

Fig. 3

Fig. 4

Fig. 5A

Fig. 5B

61

62

Fig. 6

Fig. 7

Fig. 8

## INTERNATIONAL SEARCH REPORT

| | International application No. |
| --- | --- |
| | **PCT/CN2023/085565** |

| A. | CLASSIFICATION OF SUBJECT MATTER |
| --- | --- |

G06T19/00(2011.01)i

According to International Patent Classification (IPC) or to both national classification and IPC

| B. | FIELDS SEARCHED |
| --- | --- |

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNABS, CNTXT, ENTXTC, WPABSC, DWPI: 背景, 填充, 补全, 穿帮, 调整, 改变, 脚, 删, 试穿, 试戴, 图像, 鞋子, 修改, 修正, 优化, 增强现实, AR, background, fill, complete, collar, adjust, change, foot, delete, try on, image, shoe, modify, correct, optimize

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 114742978 A (BEIJING BYTEDANCE NETWORK TECHNOLOGY CO., LTD.) 12 July 2022 (2022-07-12)<br>description, paragraphs 3-51 | 1-20 |
| X | CN 107977885 A (BEIJING XIAOMI MOBILE SOFTWARE CO., LTD.) 01 May 2018 (2018-05-01)<br>description, paragraphs 123, 128, 136 and 218 | 1-20 |
| A | CN 111985995 A (ZUGO TECHNOLOGY (HANGZHOU) CO., LTD.) 24 November 2020 (2020-11-24)<br>entire document | 1-20 |
| A | CN 108961015 A (ZHU PEIHENG) 07 December 2018 (2018-12-07)<br>entire document | 1-20 |
| A | CN 112581567 A (TENCENT TECHNOLOGY (SHENZHEN) CO., LTD.) 30 March 2021 (2021-03-30)<br>entire document | 1-20 |

| ☑ Further documents are listed in the continuation of Box C. | ☑ See patent family annex. |
| --- | --- |

| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search | Date of mailing of the international search report |
| --- | --- |
| **17 May 2023** | **02 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/085565** |

**C.     DOCUMENTS CONSIDERED TO BE RELEVANT**

| Category* | Citation of document, with indication, where appropriate, of the relevant passages | Relevant to claim No. |
|---|---|---|
| A | CN 108961386 A (TENCENT TECHNOLOGY (SHENZHEN) CO., LTD.) 07 December 2018 (2018-12-07)<br>entire document | 1-20 |
| A | WO 2018049430 A2 (INTEGEM INC.) 15 March 2018 (2018-03-15)<br>entire document | 1-20 |
| A | US 2019050427 A1 (ZEEKIT ONLINE SHOPPING LTD.) 14 February 2019 (2019-02-14)<br>entire document | 1-20 |

Form PCT/ISA/210 (second sheet) (July 2022)

**INTERNATIONAL SEARCH REPORT**
**Information on patent family members**

International application No.

**PCT/CN2023/085565**

| Patent document cited in search report | | | Publication date (day/month/year) | Patent family member(s) | | | Publication date (day/month/year) |
|---|---|---|---|---|---|---|---|
| CN | 114742978 | A | 12 July 2022 | None | | | |
| CN | 107977885 | A | 01 May 2018 | CN | 107977885 | B | 14 December 2021 |
| CN | 111985995 | A | 24 November 2020 | None | | | |
| CN | 108961015 | A | 07 December 2018 | EP | 3599590 | A1 | 29 January 2020 |
| CN | 112581567 | A | 30 March 2021 | HK | 40040444 | A0 | 30 July 2021 |
| | | | | WO | 2022135108 | A1 | 30 June 2022 |
| | | | | US | 2023048147 | A1 | 16 February 2023 |
| CN | 108961386 | A | 07 December 2018 | CN | 108961386 | B | 25 May 2021 |
| WO | 2018049430 | A2 | 15 March 2018 | WO | 2018049430 | A3 | 24 May 2018 |
| | | | | CN | 109564706 | A | 02 April 2019 |
| | | | | CN | 109564706 | B | 10 March 2023 |
| US | 2019050427 | A1 | 14 February 2019 | US | 10534809 | B2 | 14 January 2020 |
| | | | | US | 2022138250 | A1 | 05 May 2022 |
| | | | | US | 2020183969 | A1 | 11 June 2020 |
| | | | | US | 11227008 | B2 | 18 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210369250